# FASCICULE DE BREVET EUROPEEN

(11) **EP 2 367 743 B1**
(45) Date de publication et mention de la délivrance du brevet: **17.10.2012**
(21) Numéro de dépôt: 09797127.9
(22) Date de dépôt: 30.11.2009
(51) Int. Cl.: B65D 90/12, B65D 90/06, B65D 90/24

(54) **INSTALLATION POUR LA RECEPTION D'UN CONTENANT DE GRANDE CAPACITE, DU GENRE BENNE OU CONTENEUR**
EINRICHTUNG ZUR AUFNAHME VON KÜBELN ODER BEHÄLTERN MIT GROSSEM FASSUNGSVERMÖGEN
EQUIPMENT FOR RECEIVING HIGH-CAPACITY BUCKET OR CONTAINER

(30) Priorité: 28.11.2008 FR 0806697
(43) Date de publication de la demande: 28.09.2011
(73) Titulaire: Lucas G, 85130 La Verrie (FR)
(72) Inventeur: GUITTON, Dany, F-85130 Saint Martin des Tilleuls (FR); RAMBAULT, Dominique, F-85130 La Verrie (FR)
(74) Mandataire: Orsini, Fabienne
(86) Numéro de dépôt international: PCT/FR2009/052343
(87) Numéro de publication internationale: WO 2010/061153

(56) Documents cités:
- EP-A- 1 493 686
- DE-U1- 8 800 351
- FR-A- 2 878 794
- FR-A1- 2 733 490
- GB-A- 2 160 844

## Description

La présente invention concerne les installations pour la réception d'un contenant de grande capacité, par exemple du genre benne ou conteneur, apte à être pris en charge par un véhicule porteur équipé d'un bras de manipulation articulé ou d'une rampe basculante de treuillage.

Les véhicules porteurs utilisés pour déplacer et transporter les contenants de grande capacité peuvent être des véhicules équipés - d'un châssis arrière muni d'éléments de guidage pour les organes d'appui inférieurs du contenant, et - d'un système de manoeuvre intervenant dans les opérations de chargement et de déchargement du contenant, par traction ou poussée sur ce dernier, selon le cas.
Ces moyens de manoeuvre se présentent généralement, soit sous la forme d'un bras central de manipulation articulé, pour les véhicules « AMPLIROLL » (marque déposée), soit d'une rampe basculante de treuillage, pour les véhicules « roll-off hoist ». L'extrémité du système de manoeuvre coopère avec un organe de préhension ménagé au niveau de la face avant du contenant, pour réaliser ces opérations de chargement et de déchargement.
De tels ensembles véhicule porteur/contenant sont par exemple décrits dans les documents EP-1 020 312, FR-2 796 598 ou encore US-4 840 532.

Au niveau de leur site d'utilisation, ces contenants peuvent être déposés sur des installations de réception prévues à cet effet, par exemple décrites dans les documents EP-1 493 686, FR-2 733 490 ou encore FR-2 838 146, comprenant un berceau support constitué de deux rails parallèles montés sur une structure de piètement.
Ce berceau support peut être éventuellement équipé d'un élément de couverture, ainsi que d'un système collecteur des liquides susceptibles de s'écouler du contenant.

Dans la plupart des installations de réception actuelles, lors des opérations de pose/enlèvement du contenant, l'extrémité arrière des organes d'appui inférieurs du contenant se déplacent sur au moins une partie de la longueur des rails du berceau.

Or, en pratique, ces déplacements des organes d'appui sur les rails, posent parfois des problèmes, en fonction notamment de la structure de ces organes d'appui et de la structure des rails du berceau.
De même, ces déplacements des organes d'appui génèrent souvent des frottements, qui sont susceptibles de détériorer les rails supports.

Pour remédier à cet inconvénient, certaines installations comportent un organe de réception en forme de chariot mobile qui est muni - de moyens supports supérieurs sur lesquels est destinée à venir prendre appui l'extrémité arrière des organes d'appui du contenant, et - de moyens permettant à ce chariot de se mouvoir longitudinalement, en particulier lors des manoeuvres par le véhicule porteur dudit contenant en appui sur ledit chariot de réception.

Par exemple, le document FR-2 878 794 décrit une traverse mobile équipant une remorque routière, pour faciliter le chargement et le déchargement d'un conteneur entre ladite remorque routière et un camion équipé d'un bras de préhension/manutention.
Cette traverse mobile comporte - au moins une interface de chargement apte à recevoir et à coopérer avec le conteneur rapporté, et - des moyens de déplacement, destinés à rouler de façon guidée sur des pistes longitudinales pour le transfert de la remorque.

Cependant, les installations de réception actuelles pour de tels contenants, avec ou sans chariot, ne sont pas satisfaisantes sur le plan de la collecte des fluides susceptibles de s'écouler du contenant (fluides intrinsèques aux produits stockés ou eaux pluviales récupérées).
Certaines de ces installations sont bien équipées d'un collecteur pour la récupération des fluides, comme prévu dans le document EP-1 493 686 ; mais ce collecteur est prévu au niveau de l'extrémité arrière des rails, ce qui permet une collecte uniquement lorsque le contenant est en position finale et convenablement posé sur la structure de réception.

Au regard des limites des structures actuelles, le demandeur a développé une nouvelle structure de réception apte à être mise en place rapidement au niveau de son site d'utilisation, mais aussi adaptée pour optimiser les opérations de pose/enlèvement des contenants, qui permet en plus une collecte optimale des fluides s'écoulant du conteneur, cela en permanence et en particulier tout au long desdites opérations de pose et enlèvement.

Ainsi, l'installation de réception selon l'invention est du type comportant :
(i) des moyens fixes pour la réception de l'extrémité avant des organes d'appui du contenant, et
(ii) un organe de réception en forme de chariot mobile qui est muni, d'une part, de moyens supports supérieurs sur lesquels est destinée à venir prendre appui l'extrémité arrière des organes d'appui dudit contenant, et d'autre part, de moyens permettant audit chariot de se mouvoir longitudinalement, en particulier lors des manoeuvres par le véhicule porteur dudit contenant en appui sur ledit chariot de réception.
Conformément à l'invention le chariot de réception est équipé de moyens pour la collecte des liquides susceptibles de s'écouler du contenant, lesquels moyens collecteurs sont formés de préférence par un corps transversal comportant un ou des orifices d'évacuation des fluides collectés, convenablement répartis, et lesquels moyens collecteurs sont associés à au moins un réservoir de stockage des fluides collectés (ce réservoir peut être porté par le chariot et/ou les rails ; il peut aussi être déporté de l'installation).

Ce chariot selon l'invention a l'avantage de permettre la récupération des fluides pendant toute la phase de pose ou d'enlèvement du contenant, puisque la collecte des fluides continue tant que le contenant est en appui sur le chariot (c'est-à-dire même lorsque la benne est cabrée au maximum).

D'autres caractéristiques avantageuses, pouvant être prises indépendamment ou en combinaison, sont développées ci-dessous :
- les moyens de réception fixes comprennent deux organes de réception fixes qui sont chacun en forme de jambe, lesquels organes fixes sont chacun réglable en hauteur et sont chacun adapté pour être posé au sol (et de préférence également fixé au sol), pour ajuster de manière simple et rapide l'inclinaison du contenant réceptionné (de préférence selon une pente descendante de la face avant vers la face arrière opposée à l'organe de préhension) ; dans ce cadre, les deux organes de réception fixes comportent de préférence chacun une face supérieure conformée pour recevoir l'un des organes d'appui du contenant et une face inférieure adaptée pour être posée au sol ; et de préférence encore, les jambes de réception fixes comportent une face supérieure d'appui bordée par deux ailes latérales parallèles ;
- le chariot de réception est apte à coopérer avec des moyens posés au sol (fixés ou non), assurant son guidage longitudinal, et les moyens collecteurs sont associés à des gouttières de collecte portées par lesdits moyens de guidage pour l'écoulement des fluides depuis lesdits moyens collecteurs jusqu'au(x) réservoir(s) de stockage ; dans ce cas, le corps transversal pour la collecte des liquides est avantageusement associé à des collecteurs latéraux comportant un ou des orifices d'évacuation des fluides collectés, convenablement répartis ; et de préférence les collecteurs latéraux sont réglables en largeur pour s'adapter au plus près à la largeur du contenant rapporté ;
- les moyens de guidage consistent en des rails reposant (et éventuellement fixés) sur le sol par l'intermédiaire, d'une part au niveau de leur extrémité avant, des jambes qui sont destinées à recevoir l'extrémité avant des organes d'appui du contenant, et d'autre part au niveau de leur extrémité arrière, de deux pieds, lesquels jambes avant et pieds arrière sont réglables en hauteur, de sorte à pouvoir régler l'inclinaison des rails de guidage ; de préférence, l'extrémité arrière des rails sert également de support à une structure verticale comportant un organe de crochetage et un élément de couverture mobile ;
- le chariot mobile consiste en une structure dont les moyens de réception supérieurs correspondent à la surface supérieure de deux longerons latéraux, chacun desdits longerons étant destiné à recevoir l'extrémité arrière de l'un des organes d'appui du contenant ; dans ce cas, chaque collecteur latéral est avantageusement fixé sur la longueur de la bordure extérieure de l'un des longerons latéraux du chariot, et la paroi de plancher desdits collecteurs s'étend sous le niveau du corps transversal ;
- le chariot de réception comporte le corps transversal reliant les deux longerons latéraux munis de moyens en forme de patins pour son déplacement longitudinal ;
- le chariot de réception est équipé d'un système de bavette muni de volet(s) arrière, apte(s) à venir en regard de la face arrière du contenant lors de son positionnement sur ledit chariot, et éventuellement de volets latéraux, prolongeant latéralement ledit ou lesdits volets arrière, aptes à venir en regard de la partie arrière des faces latérales du contenant rapporté ; ce système de bavettes a l'intérêt d'épouser au mieux la partie arrière du contenant, ce qui le rend relativement étanche aux eaux de pluie (en particulier par rapport aux collecteurs classiques) ; on notera en outre que la bavette arrière peut faire office également de structure de butée telle que définie ci-dessus ; toujours dans ce cas, le volet arrière de la bavette et, le cas échéant, les deux volets latéraux, sont structurés de sorte à pouvoir être rabattus sur le collecteur, de manière à rendre ce dernier étanche ou quasiment étanche en absence de contenant.

La présente invention porte encore sur un chariot pour installation de réception d'un contenant de grande capacité, par exemple du genre benne ou conteneur, comportant :
- des moyens supérieurs aptes à recevoir l'extrémité arrière des organes d'appui dudit conteneur,
- des moyens permettant son déplacement longitudinal, en particulier lors de la manoeuvre du contenant associé par le bras de manipulation articulé ou la rampe basculante de treuillage équipant le châssis arrière d'un véhicule porteur, et
- des moyens pour la collecte des liquides susceptibles de s'écouler du contenant, lesquels moyens collecteurs sont formés par un corps transversal éventuellement associé à des collecteurs latéraux, comportant un ou des orifices d'évacuation des fluides collectés, convenablement répartis.

Selon une autre particularité, le chariot mobile consiste en une structure mécano-soudée.
Les moyens de réception supérieurs correspondent avantageusement à la surface supérieure de deux longerons latéraux, chacun desdits longerons étant destiné à recevoir l'extrémité arrière de l'un des organes d'appui du contenant.
Selon une alternative, les moyens de réception supérieurs consistent en un profilé transversal muni d'une surface supérieure d'appui présentant une section transversale en forme générale de Vé ou de U.

Dans le cas d'une telle structure, selon une forme de réalisation particulièrement intéressante, le chariot de réception comporte un corps transversal reliant deux longerons latéraux munis de moyens en forme de roues, galets ou patins pour son déplacement longitudinal.
Cette structure a l'intérêt d'être particulièrement simple, ce qui permet de limiter son coût de revient tout en préservant des caractéristiques de rigidité et de solidité particulièrement intéressantes.

Selon encore une autre caractéristique, le chariot mobile comporte une structure s'étendant en saillie vers le haut, au niveau de sa partie arrière, formant une butée pour la partie arrière du contenant lors de sa dépose.

L'invention sera encore illustrée, sans être aucunement limitée, par la description suivante de diverses formes de réalisation, données uniquement à titre d'exemples et représentées sur les dessins annexés dans lesquels :
- la figure 1 est une vue générale et de côté, d'une installation de réception conforme à l'invention, sur laquelle est rapporté un contenant de grande capacité ;
- la figure 2 est une vue générale, en perspective, de l'installation illustrée figure 1, sans son contenant associé ;
- les figures 3 à 7 sont des vues de côté de l'installation illustrée figures 1 et 2, montrant les principales étapes de la cinématique mise en oeuvre pour la dépose d'un contenant sur cette installation ;
- la figure 8 est une vue générale, en perspective, d'une installation de réception, de type « autostable », qui est apte à être prise en charge par un véhicule porteur et qui intègre un autre type de chariot mobile conforme à l'invention ;
- la figure 9 est une vue de face et partielle de l'installation illustrée figure 8, selon un plan de coupe vertical passant devant le chariot mobile et par les rails du soubassement (la potence et l'élément de couverture ne sont ici pas représentés par souci de simplification) ;
- la figure 10 est une vue en perspective du chariot des figures 8 et 9, isolé du reste de l'installation de réception ;
- la figure 11 est une vue générale, en perspective, d'une autre forme de réalisation possible d'une installation conforme à l'invention, associée à un contenant, dont le chariot est équipé d'un système de bavettes déployables ;
- la figure 12 est une vue en perspective de l'installation illustrée sur la figure 11, avec son système de bavettes en position déployée et sans le contenant associé ;
- la figure 13 est une vue de côté de l'installation illustrée sur la figure 12 ;
- la figure 14 est une vue en perspective de l'installation illustrée sur les figures 11 à 13, dans laquelle le système de bavettes équipant le chariot est placé dans une configuration repliée.

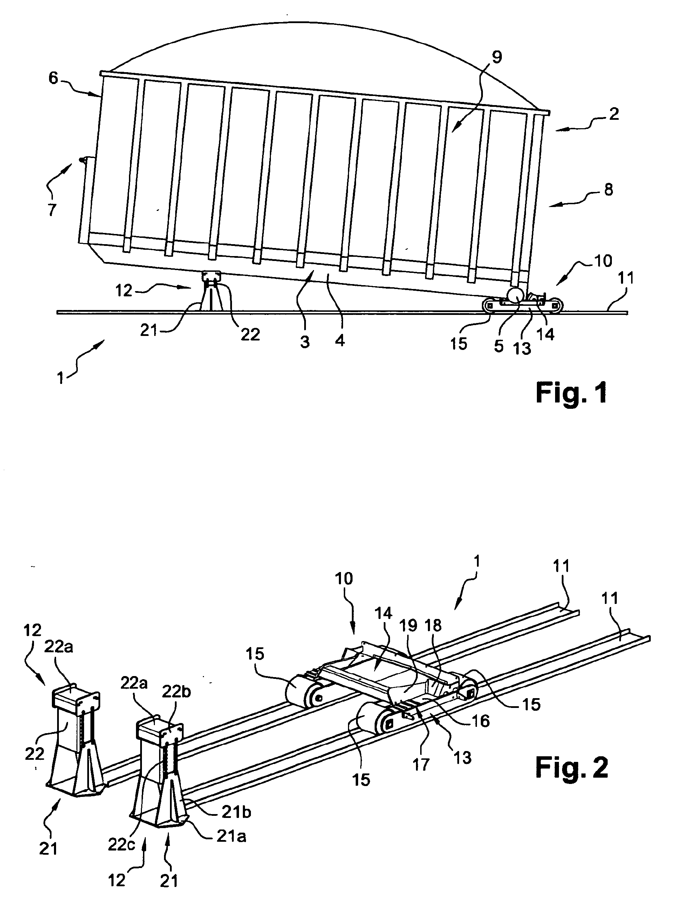

Les figures 1 et 2 détaillent une première installation particulière 1 selon l'invention, adaptée pour la réception d'un contenant de grande capacité 2, par exemple du genre benne ou conteneur, ouvert sur le dessus (comme illustré sur la figure 1).

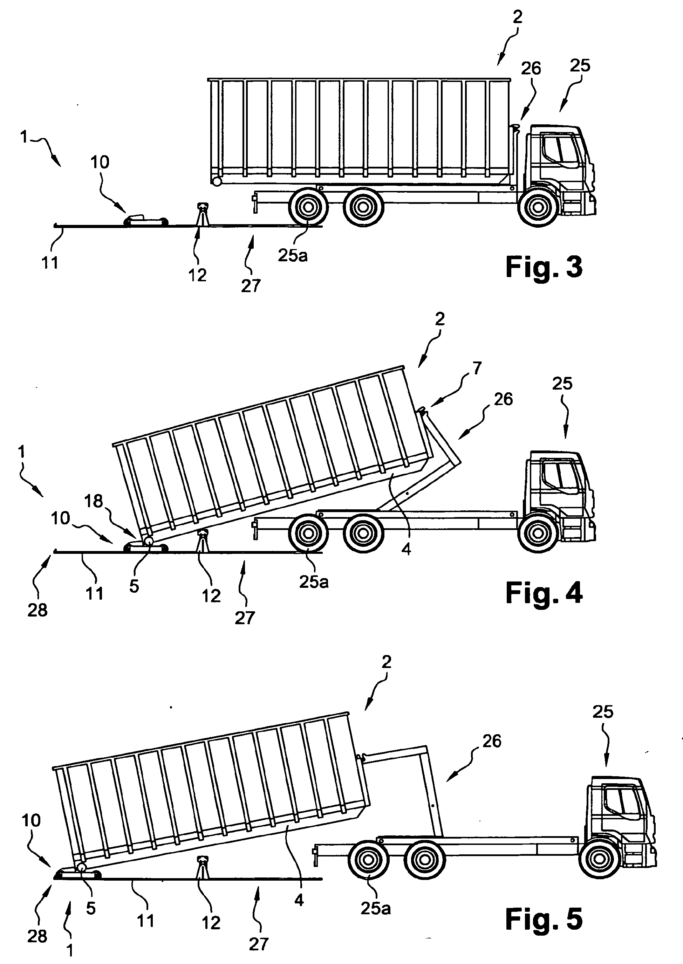

La structure d'un tel contenant de grande capacité 2 est bien connue de l'homme du métier.
Il comprend, de manière classique, une face inférieure 3 munie d'organes d'appui inférieurs 4, ici sous la forme de deux profilés longitudinaux parallèles l'un par rapport à l'autre et présentant une section en Té inversé.
L'extrémité arrière de ces deux profilés longitudinaux 4 consiste en des galets rotatifs 5, destinés à faciliter les déplacements habituels de l'extrémité arrière du contenant sur le sol (ou sur toutes autres structures de réception adaptées), lors des opérations de dépose ou de chargement/enlèvement. De manière alternative, l'extrémité arrière des profilés longitudinaux 4 peut être dénuée/dépourvue de tels galets 5.
Ce contenant 2 comprend encore une ceinture de parois latérales.
Il présente une face avant 6 équipée d'un organe de préhension 7 (en forme d'anneau d'accrochage) apte à coopérer avec le bras de manipulation articulé, ou avec la rampe basculante de treuillage, équipant le châssis arrière d'un véhicule porteur (comme décrit par la suite en relation avec les figures 3 à 7).
A l'opposé, on trouve la face arrière 8 du contenant ; deux faces latérales 9 en regard raccordent ces faces avant 6 et arrière 8.

L'installation de réception 1 comporte :
(i) un organe arrière de réception mobile 10, en forme de chariot, apte à se mouvoir sur deux rails de guidage longitudinaux 11, et
(ii) deux organes avant de réception fixes 12, consistant chacun en une pièce en forme de jambe, réglable en hauteur.

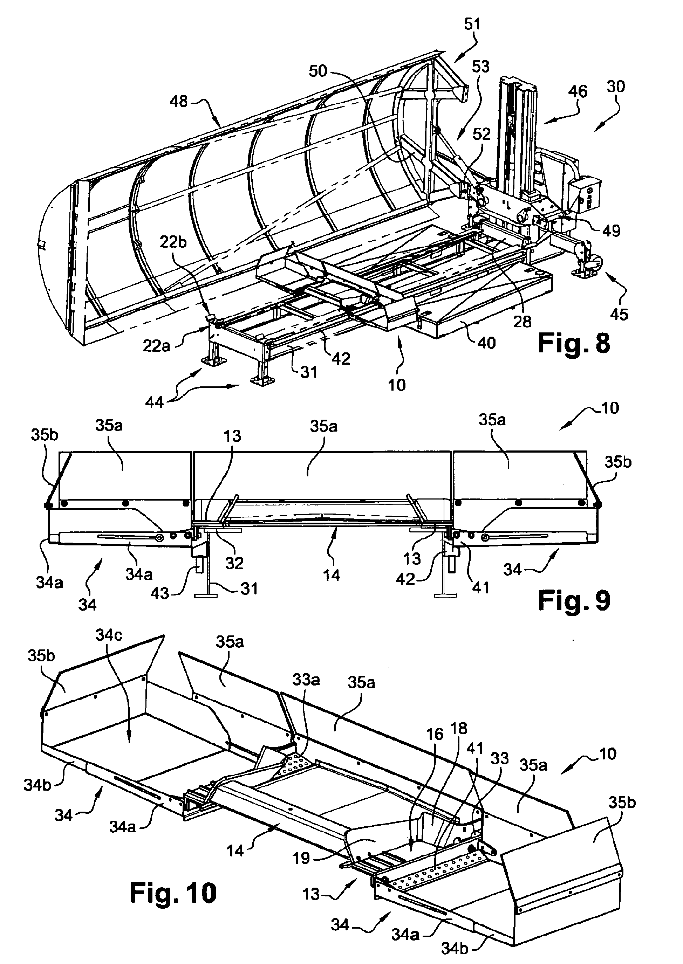

Le chariot mobile 10 consiste en une structure mécano-soudée, qui se compose de deux longerons latéraux 13 (parallèles et à distance l'un de l'autre) reliés par un corps transversal 14.
Conformément à l'invention et comme détaillé par la suite en relation avec les figures 8 à 12, ce chariot mobile 10 est équipé de moyens pour la collecte des liquides susceptibles de s'écouler du contenant.

Les longerons latéraux 13 sont chacun munis de moyens 15 pour faciliter le déplacement longitudinal du chariot 10 au sein des rails de guidage 11, ici sous forme de roues ou galets.
Les efforts du contenant sur le chariot 10 sont ainsi répartis sur les quatre galets 15.

Par ailleurs, chaque longeron latéral 13 comporte une surface supérieure 16, en l'occurrence une zone plane et allongée, sur laquelle est destinée à venir prendre appui l'extrémité arrière 5 de l'un des profilés latéraux de contenant 2.

Ces surfaces supérieures 16 sont adaptées à la réception et au positionnement efficace de ces extrémités arrière 5 de profilés latéraux 4.
A cet effet, la surface supérieure de réception 16 de chacun des deux longerons latéraux 13 comporte ici plusieurs particularités structurelles.

A l'avant (du côté des jambes fixes 12), chaque surface de réception 16 comporte un groupe de nervures transversales 17, dont le rôle principal est d'assurer une coopération du genre solidarisation entre le chariot et l'extrémité arrière 5 des profilés latéraux 4 du contenant 2, pour un suivi/accompagnement efficace du chariot 10 lors des opérations d'enlèvement.

A l'arrière (à l'opposé des jambes fixes 12), un organe de butée 18 s'étend transversalement et prolongeant vers le haut la surface de réception 16, en particulier pour former des moyens de butées pour l'extrémité arrière 5 de l'un des profilés latéraux 4 du contenant 2.
Cet organe de butée 18 est ici constitué par un prolongement latéral du corps transversal 14.

De plus, les surfaces de réception 16 sont chacune prolongées, le long de leur bordure intérieure, par un organe de centrage 19 s'étendant vers le haut, en particulier pour assurer le positionnement optimal de l'extrémité arrière 5 des profilés latéraux 4 du contenant 2 lors de l'opération de pose.
Ces organes de centrage 19 consistent en l'occurrence en deux surfaces qui sont inclinées vers l'intérieur (elles convergent l'une vers l'autre, ou se rapprochent l'une de l'autre, du bas vers le haut).
Ici, ces organes de centrage 16 sont formés chacun par un volet latéral constitutif du corps transversal 14.

Comme développé encore par la suite, le corps transversal 14, venant ici en regard de la bordure inférieure de la face arrière 8 du contenant 2, forme un bac collecteur pour la récupération des jus (en particulier du fait de la forme diédrique de sa surface supérieure, son arête saillante orientée vers le haut étant parallèle à son axe de déplacement avant/arrière). Ce corps transversal 14 est équipé ici d'orifices latéraux pour l'évacuation sur les côtés des liquides collectés (ces orifices latéraux sont ménagés en arrière des organes de butée 18 ; ils sont désignés par le repère 33 sur la figure 10).
Les liquides collectés sont ainsi ici orientés de sorte à s'écouler par exemple directement dans les rails 11, servant alors de gouttières. Les fluides vont alors cheminer, vers l'avant ou vers l'arrière en fonction de l'inclinaison de rails, de préférence dans un réservoir de stockage dédié (non représenté).

Par ailleurs, les jambes de réception fixes 12 ont une structure générale similaire à celle décrite dans le document FR-2 856 390.

Ces jambes fixes 12 consistent chacune en l'association de deux pièces mécano-soudées 21 et 22, ajustables l'une par rapport à l'autre pour permettre leur réglage en hauteur.

Ces jambes fixes 12 se composent chacune d'une pièce inférieure d'embase 21 ayant une section verticale en forme générale de U. Cette pièce d'embase 21 comporte un volet inférieur 21a formant socle, fixé au sol (ou dans une fondation en béton) par boulonnage ou par un système de chevilles, prolongé par deux volets latéraux verticaux 21b, en regard l'un de l'autre, qui sont reliés de manière amovible à la pièce supérieure mobile 22 (par exemple par boulonnage ou par un système de goupilles).

Cette dernière pièce supérieure 22 comporte en particulier une face supérieure plane d'appui 22a, bordée par deux ailes latérales parallèles 22b destinées à optimiser le maintien latéral des organes d'appui 4 du contenant 2 porté. Cette pièce 22 est encore munie de deux rangées latérales d'orifices 22c (visibles sur la figure 2), pour autoriser l'assemblage précité de la pièce supérieure 22 selon une hauteur réglable par rapport à la pièce inférieure 21.

Les figures 3 à 7 montrent les principales étapes survenant lors de la dépose du contenant 2 sur une installation de réception 1 telle que décrite ci-dessus en relation avec les figures 1 et 2.

De manière générale, le déchargement du contenant, et sa dépose sur l'installation, s'effectuent selon une procédure classique, cela au moyen d'un véhicule 25 équipé d'un bras de manoeuvre articulé 26, par exemple un bras AMPLIROLL (marque déposée).

En pratique, l'installation de réception 1 est implantée sur le site destiné à être équipé d'un contenant 2. Cette implantation est rapide du fait de la structure simple de l'installation 1.

Pour le déchargement ou la pose d'un contenant 2, le véhicule porteur 25 manoeuvre de sorte à venir dans le prolongement de l'installation de réception 1 et de sorte que son extrémité arrière soit positionnée au niveau (ou au moins à proximité) des deux jambes fixes 12 (figure 3).
En l'occurrence, le véhicule 25 recule ici jusqu'à ce que son essieu arrière 25a vienne se placer au sein d'une structure de positionnement 27 optionnelle, réglable et posée au sol (fixée ou non au sol) en avant des jambes fixes 12, qui permet (i) un placement correct du véhicule porteur 25 par rapport à l'installation 1 et aussi (ii) un blocage de l'installation 1 par liaison relative entre le camion et ladite installation 1.
Dans cette position initiale, le chariot 10 est placé vers l'avant de l'installation, du côté des jambes fixes 12.

Le bras de manoeuvre 26 est alors articulé progressivement vers l'arrière, de sorte à réaliser une poussée et une inclinaison du contenant 2 également vers l'arrière.

Lors de cette manoeuvre, tout d'abord, l'extrémité arrière 5 des organes d'appui 4 du contenant 2 vient reposer sur les surfaces de réception 16 du chariot 10 (figure 4). Ce positionnement est guidé par les organes de centrage 19 (l'extrémité arrière 5 des profilés latéraux 4 coopérant, lors de leur descente, avec ces organes de centrage 19).

La poursuite de la manoeuvre du bras articulé 26 continue à pousser vers l'arrière le contenant 2, toujours en appui uniquement sur le chariot 10.
L'extrémité arrière 5 des profilés latéraux 4 est bloquée en appui contre les organes de butées arrière 18 des surfaces de réception 16, ce qui provoque le cheminement du chariot 10 le long et vers l'arrière des rails de réception latéraux 11 (en s'éloignant des jambes fixes 12), comme représenté sur les figures 4 et 5.

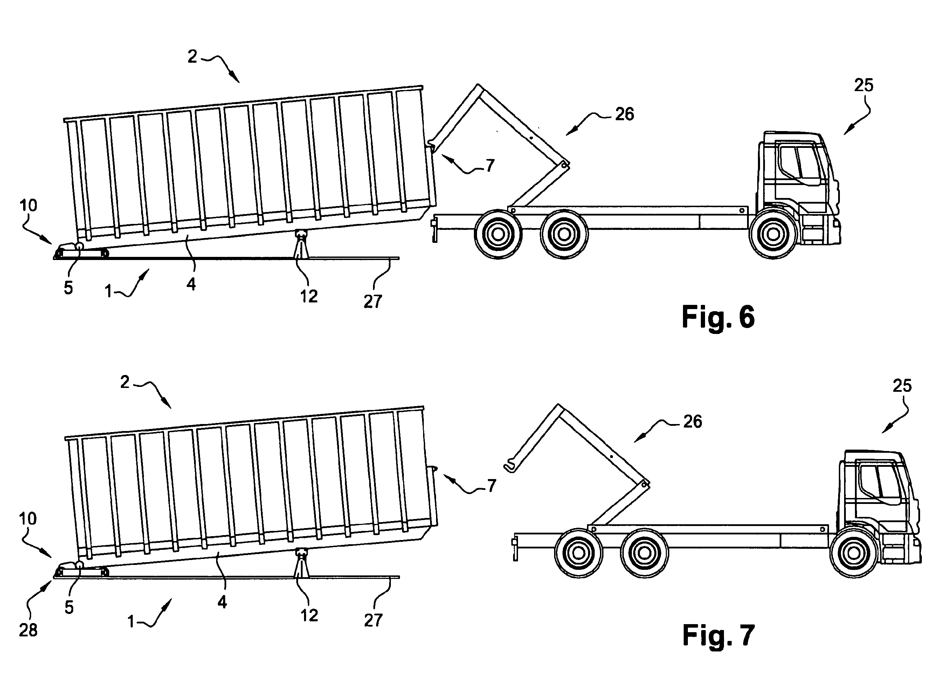

Lorsque le chariot 10 arrive en contact avec des butées arrière 28 qui équipent les rails de guidage 11, le véhicule porteur 25 avance progressivement, de sorte à autoriser la poursuite de la manoeuvre du bras articulé 26 jusqu'à ce que les organes d'appui 4 du contenant 2 viennent reposer également sur la face supérieure 22a des deux jambes fixes 12 (figures 6 et 7).

Une fois le contenant 2 entièrement en appui sur l'installation 1 (sur le chariot 10 à l'arrière, et sur les jambes fixes 12 à l'avant), le bras 25 se décroche automatiquement de l'organe de préhension 7 du contenant 2 (figure 7).

L'enlèvement du contenant 2 s'effectue, de manière classique, par des manoeuvres inverses.
En particulier, là encore, ce chargement sur le véhicule est facilité par le chariot 10, qui va suivre un cheminement inverse à celui décrit ci-dessus, vers l'avant des rails de guidage 11 (c'est-à-dire vers les deux jambes fixes 12).
Comme abordé précédemment, cet accompagnement du chariot 10 est optimisé par la présence des nervures transversales 17 à l'avant des surfaces de réception 16.

Les figures 8 à 10 représentent une autre forme d'installation conforme à l'invention, à savoir une installation de réception du genre « auto-stable » qui est apte à être prise en charge par un véhicule porteur.

Cette installation 30 comprend un chariot 10 mobile longitudinalement sur la longueur de deux rails parallèles 31 en forme de profilé à section en I.
Ce chariot 10 présente également un certain jeu transversal sur les rails 31 (perpendiculairement à la longueur de ces rails), avec avantageusement des moyens de butée latéraux (par exemple des patins en matière plastique). Cette particularité autorise le positionnement transversal optimal de ce chariot 10, au moment de la mise en place du contenant 2 (l'extrémité arrière 5 des profilés d'appui 4 venant coopérer avec les organes de centrage 19 du chariot 10).

Le chariot 10 est similaire à celui décrit ci-dessus en relation avec les figures 1 à 7.

Comme représenté en détail sur les figures 9 et 10, ce chariot 10 consiste là encore en une structure mécano-soudée comprenant - les deux longerons latéraux 13, formant moyens de déplacement sur les rails 31 et moyens de réception du contenant 2, et - le corps transversal 14.

Ce chariot 10 repose directement sur les rails 31, ici par l'intermédiaire de patins 32 (visibles figure 9), facilitant son déplacement.

Comme évoqué précédemment, ce chariot 10 comporte des moyens pour la collecte des liquides susceptibles de s'écouler du contenant porté par l'installation.

A cet effet, le corps transversal 14 forme un bac collecteur (en particulier du fait de la forme diédrique de sa surface supérieure, son arête saillante orientée vers le haut étant parallèle aux rails 31) pour récupérer les jus.
Ce corps transversal 14 est équipé d'orifices latéraux 33, pour l'évacuation sur les côtés des liquides collectés (en arrière des organes de butée 18, visibles figure 10). Une grille 33a peut être prévue au niveau de ces orifices 33, pour le filtrage des fluides avant leur écoulement.

Deux collecteurs latéraux 34, également en forme de bacs, sont rapportés en porte-à-faux de part et d'autre du corps transversal 14. Ils prolongent latéralement ce corps transversal 14.
Les fluides collectés par le corps transversal 14 s'écoulent dans ces collecteurs latéraux 34, au travers des orifices 33 précités ; les fluides sortant par les côtés de la face arrière du contenant rapporté sont également destinés à être récupérés directement par ces collecteurs latéraux.

Chaque collecteur latéral 34 est, en l'occurrence, fixé sur la longueur de la bordure extérieure de l'un des longerons latéraux 13 du chariot 10.
La paroi de plancher de ces collecteurs 34 s'étend ici sous le niveau du corps transversal 14 associé.

Ces collecteurs latéraux 34 sont, de plus, réglables en largeur pour s'adapter au plus près à la largeur du contenant rapporté. Cette particularité permet notamment de limiter la collecte des eaux naturelles, en particulier des eaux de pluies.
Pour cela, chaque collecteur latéral 34 se compose ici de deux pièces associées : d'une part, une pièce intérieure 34a, formant coulisse et fixée en porte-à-faux sur l'un des longerons 13, et d'autre part, une pièce extérieure mobile 34b, montée de manière télescopique et coulissante sur la pièce intérieure 34a précitée.

D'autre part, un système de bavettes 35 est rapporté au niveau de la face arrière de ce chariot 10, pour optimiser cette collecte des liquides par les collecteurs 14, 34 et aussi pour limiter la projection des liquides vers l'arrière et sur les côtés.

Comme représenté sur les figures 9 et 10, ce système de bavettes 35 se compose :
- d'une part, de volets transversaux 35a, en arrière du corps transversal 14 et des collecteurs latéraux 34 (aptes à venir en regard de la face arrière 8 du contenant 2), et
- d'autre part, de deux volets latéraux 35b s'étendant à partir de la bordure extérieure des collecteurs latéraux 34 et prolongeant latéralement les volets transversaux 35a (qui sont aptes à venir en regard de la partie arrière des faces latérales 9 du contenant 2 rapporté).

Les liquides collectés sont évacués ici vers un réservoir fixe 40, localisé au niveau de l'extrémité arrière des rails 31.

A cet effet, comme représenté sur les figures 9 et 10, les collecteurs latéraux 34 sont munis chacun d'une ouverture d'évacuation intérieure 41, en l'occurrence en forme de grille, située en regard du rail 31 attenant.
Une gouttière de collecte 42, ouverte sur le dessus, est fixée sur chacun des rails 31 (du côté extérieur) ; cette gouttière 42 s'étend directement sous l'ouverture d'évacuation intérieure 41 de l'un des collecteurs latéraux 34, pour recevoir les liquides qui s'en écoulent.
L'extrémité arrière de cette gouttière 42 comporte encore une sortie 43 pour l'évacuation des fluides, qui est connectée au réservoir 40 par des flexibles adaptés.
On note que l'ouverture supérieure des gouttières 42 a une largeur adaptée au jeu transversal du chariot 10. On note encore que la paroi de fond 34c des collecteurs latéraux 34 est inclinée selon une pente descendante de l'extérieur vers l'intérieur (en direction du rail 31 attenant), pour favoriser l'évacuation des liquides au travers de l'ouverture 41.

Par ailleurs, les deux rails 31 reposent sur le sol par l'intermédiaire, d'une part, de jambes 44 (similaires à celles décrites dessus en relation avec les figures 1 et 2) au niveau de leur extrémité avant, et d'autre part, de deux pieds 45 au niveau de leur extrémité arrière.
On note que ces jambes 44 ont chacune une surface supérieure 22a, bordée par deux volets latéraux 22b, destinée à recevoir l'extrémité avant de l'un des profilés longitudinaux équipant la face inférieure du contenant réceptionné (comme décrit précédemment en relation avec les figures 3 à 7).
Ces jambes avant 44 et pieds arrière 45 sont réglables en hauteur, de sorte à pouvoir régler l'inclinaison des rails de guidage 31, selon une pente descendante de l'avant vers l'arrière.

Les rails 31, reliés par une pluralité d'entretoises, ont une surface inférieure agencée de préférence pour pouvoir venir reposer sur le châssis arrière du véhicule de transport, suite à son chargement.

Comme illustré figure 8, l'extrémité arrière des rails 31 sert également de support à une structure verticale 46, en forme de potence verticale centrée entre les deux rails 31.
Cette structure verticale 46 comporte un organe de crochetage (non visible) ménagé extérieurement, c'est-à-dire du côté opposé par rapport aux rails parallèles 31, et qui est apte à être pris en charge par les moyens de préhension équipant le véhicule porteur.

En outre, cette potence verticale 46 sert également de soutien à un élément de couverture mobile 48, qui s'étend en porte-à-faux intérieurement, c'est-à-dire du côté des rails parallèles 31, en vue de venir couvrir l'ouverture supérieure du contenant 2 réceptionné.

L'élément de couverture 48 est constitué d'une charpente mécano-soudée, de forme générale demi-cylindrique, recouverte de tôle ou d'une bâche étanche.

Cet élément de couverture 48 est associé à des moyens de manoeuvre qui permettent
- son déplacement en translation verticale sur la hauteur de la potence verticale 46, et aussi
- son basculement sur au moins l'un des côtés des rails supports 31 (comme représenté sur la figure 8).

Pour cela, l'élément de couverture 48 est porté par un système de chariot primaire 49 qui est guidé sur la hauteur de la potence 46. Ce chariot primaire 49 est par exemple manoeuvré par une chaîne, un câble ou une courroie convenablement agencée.

Le chariot primaire 49 porte l'élément de couverture 48, au niveau de son extrémité arrière, par l'intermédiaire de l'une des deux extensions latérales en Vé 50 ou 51.
Ici, cet élément de couverture 48 est monté articulé sur l'extension 50 autour d'un axe de pivotement 52 qui s'étend parallèlement aux deux rails 31 et qui est déporté latéralement par rapport à ceux-ci et à la potence 46.

Le basculement de l'élément de couverture 48 autour de l'axe 52 est piloté au moyen d'un vérin 53, placé convenablement entre le chariot primaire 49 et cette couverture 48.

En pratique, cette installation 30 peut être mise en oeuvre selon une procédure identique à celle décrite précédemment en relation avec les figures 3 à 7, cela avec un coulissement du chariot 10 sur la longueur des rails de guidage 31, en fonction des opérations de chargement ou de déchargement du contenant 2 sur l'installation.
De même, l'élément de couverture 48 sera manoeuvré sur le côté d'une manière adaptée en fonction des opérations de chargement/déchargement mises en oeuvre, mais aussi en hauteur en fonction de la taille du contenant 2 réceptionné.

De manière générale, cette installation de réception 30 a l'intérêt d'être auto-stable au sol.
Elle est également facile à transporter, en vue de son déplacement, au moyen d'un véhicule porteur classique (son organe de crochetage étant apte à coopérer avec le bras ou la rampe d'un véhicule porteur et ses rails 31 étant aptes à reposer sur le châssis arrière du véhicule) ; cette installation peut être chargée sur le véhicule porteur avec son contenant associé pour assurer notamment une collecte optimale des eaux de ruissellement et/ou venir couvrir son ouverture supérieure.

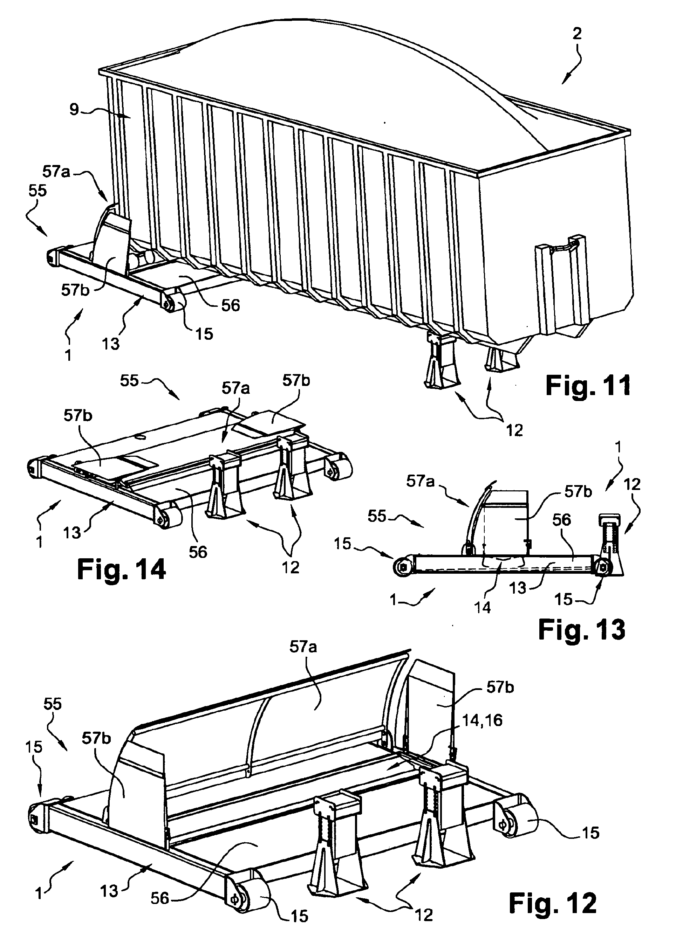

L'installation selon les figures 11 à 14 est similaire à celle décrite ci-dessus en relation avec les figures 1 et 2.

Le chariot 55 consiste, là encore, en une structure mécano-soudée composée principalement de deux longerons latéraux 13 équipés de quatre galets d'extrémité 15, et qui sont reliés par un corps transversal 14.

Le corps transversal 14 se présente ici sous la forme d'un profilé dont la surface supérieure comporte une section en Vé ou en U, ouverte vers le haut, et en particulier diédrique (avec l'arête centrale orientée vers le bas), sur laquelle est destinée à venir prendre appui l'extrémité arrière 5 des organes d'appui 4 du contenant 2.
La longueur de ce profilé transversal 14 est adaptée pour recevoir une gamme variée de largeurs de contenant 2. A titre d'exemple, ce profilé transversal 14 a avantageusement une longueur pouvant être comprise entre 2,2 m et 2,6 m, et une largeur pouvant être comprise entre 0,3 m et 1 m. Sa forme longitudinale est bien adaptée à la réception et au positionnement efficace de l'extrémité arrière 5 des organes d'appui 4.

Des rails fixés au sol, non représentés, peuvent être prévus pour le guidage longitudinal du chariot 55 (comme dans le mode de réalisation des figures 1 et 2).

Ce chariot 55 se distingue encore de celui décrit précédemment par la structure des moyens pour la collecte et le stockage des liquides susceptibles de s'écouler du contenant porté par l'installation.

A cet effet, le profilé transversal 14, apte à recevoir l'extrémité arrière 5 des organes d'appui du contenant 2, forme également un collecteur ou une gouttière (en particulier du fait de la forme de sa surface supérieure). Ce profilé 14 est alors équipé d'orifices ou de trous d'évacuation des liquides collectés, ménagés d'un côté et/ou de l'autre du profilé 14, voire en son milieu.

Un réservoir 56, pour le stockage des fluides collectés, est porté par le chariot 55 ; de manière alternative, ce réservoir peut être déporté comme décrit ci-dessus en relation avec les figures 8 à 10.

Un système de bavettes déployables 57 est rapporté au niveau de la face supérieure de ce chariot 55, pour optimiser cette collecte des liquides par le collecteur 14 et supprimer la projection des liquides vers l'arrière et sur les côtés.

Ce système de bavettes 57 se compose :
- d'une part, d'un volet longitudinal 57a, en arrière du profilé transversal 14 (apte à venir en regard de la face arrière 8 du contenant 2), et
- d'autre part, de deux volets latéraux 57b prolongeant latéralement ce volet arrière 57a et situés de part et d'autre du profilé 14 (qui sont aptes à venir en regard de la partie arrière des faces latérales 9 du contenant 2 rapporté, comme représenté sur la figure 11).

On note que le volet arrière 57a a également une fonction de butée pour le positionnement du contenant 2 lors des manoeuvres de déchargement.

En l'absence de contenant 2 ou en position de transport, le système de bavettes 57 est apte à être replié au-dessus du profilé transversal 14 (figure 14).
Ces bavettes 57, en position repliée stable, permettent d'éviter en particulier le passage des eaux de pluie au niveau du collecteur 14.

Pour autoriser ce pivotement, les volets arrière 57a et latéraux 57b sont articulés au niveau de leur bordure inférieure sur les longerons 13 du chariot 55.
Des moyens de rappel élastique sont prévus pour assurer le retour automatique du système de bavettes en position repliée ; des butées sont également prévues pour définir les positions de fins de courses (déployée et repliée) de ces volets 57 de bavette.

En pratique, cette installation de réception va là encore être mise en oeuvre d'une manière similaire à celle décrite précédemment en relation avec les figures 3 à 7.

## Revendications

1. Installation pour la réception d'un contenant (2) de grande capacité, par exemple du genre benne ou conteneur, ledit contenant comportant une face inférieure (3) équipée d'organes d'appui (4) et une face avant (6) équipée d'un organe de préhension (7) apte à coopérer avec le bras de manipulation articulé (26) ou avec la rampe basculante de treuillage équipant le châssis arrière d'un véhicule porteur (25), laquelle installation comporte :
(i) des moyens fixes (12, 44) pour la réception de l'extrémité avant desdits organes d'appui (4) du contenant (2), et
(ii) un organe de réception (10, 55) en forme de chariot mobile qui est muni, d'une part, de moyens supports supérieurs (14, 16) sur lesquels est destinée à venir prendre appui l'extrémité arrière (5) des organes d'appui (4) dudit contenant (2), et d'autre part, de moyens (15, 32) permettant audit chariot de se mouvoir longitudinalement, en particulier lors des manoeuvres par le véhicule porteur (25) dudit contenant (2) en appui sur ledit chariot de réception (10, 55), ledit chariot de réception (10, 55) étant équipé de moyens (14, 34) pour la collecte des liquides susceptibles de s'écouler du contenant (2), **caractérisée en ce que** les moyens collecteurs (14, 34) sont associés à au moins un réservoir de stockage (40, 56).

2. Installation selon la revendication 1, **caractérisée en ce que** les moyens collecteurs (14, 34) sont formés par un corps transversal (14) comportant un ou des orifices (33, 41) d'évacuation des fluides collectés, convenablement répartis,

3. Installation selon l'une quelconque des revendications 1 ou 2, **caractérisée en ce que** les moyens de réception fixes (12, 44) comprennent deux organes de réception fixes qui sont chacun en forme de jambe, lesquels organes fixes (12, 44) sont chacun réglable en hauteur et sont chacun adapté pour être posé au sol.

4. Installation selon la revendication 3, **caractérisée en ce que** les deux organes de réception fixes (12, 44) comportent chacun une face supérieure (22a) conformée pour recevoir l'un des organes d'appui (4) du contenant (2) et une face inférieure (21a) adaptée pour être posée au sol.

5. Installation selon la revendication 4, **caractérisée en ce que** les jambes de réception fixes (12, 44) comportent une face supérieure d'appui (22a) bordée par deux ailes latérales parallèles (22b).

6. Installation selon l'une quelconque des revendications 1 à 5, **caractérisée en ce que** le chariot de réception (10, 55) est apte à coopérer avec des moyens (31) posés au sol, assurant son guidage longitudinal, et **en ce que** les moyens collecteurs (14, 34) sont associés à des gouttières de collecte (42) portées par lesdits moyens de guidage (31) pour l'écoulement des fluides depuis lesdits moyens collecteurs (14, 34) jusqu'au réservoir de stockage (40).

7. Installation selon la revendication 6, **caractérisée en ce que** le corps transversal (14) pour la collecte des liquides est associé à des collecteurs latéraux (34) comportant un ou des orifices (41) d'évacuation des fluides collectés, convenablement répartis.

8. Installation selon la revendication 7, **caractérisée en ce que** les collecteurs latéraux (34) sont réglables en largeur pour s'adapter au plus près à la largeur du contenant (2) rapporté.

9. Installation selon l'une quelconque des revendications 1 à 8, **caractérisée en ce que** les moyens de guidage (31) consistent en des rails reposant sur le sol par l'intermédiaire, d'une part au niveau de leur extrémité avant, des jambes (44) qui sont destinées à recevoir l'extrémité avant des organes d'appui (4) du contenant (2), et d'autre part au niveau de leur extrémité arrière, de deux pieds (45), lesquels jambes avant (44) et pieds arrière (45) sont réglables en hauteur, de sorte à pouvoir régler l'inclinaison des rails de guidage (31).

10. Installation selon la revendication 9, **caractérisée en ce que** l'extrémité arrière des rails (31) sert également de support à une structure verticale (46) comportant un organe de crochetage et un élément de couverture mobile (48).

11. Installation selon l'une quelconque des revendications 1 à 10, **caractérisée en ce que** le chariot mobile (10) consiste en une structure dont les moyens de réception supérieurs correspondent à la surface supérieure (16) de deux longerons latéraux (13), chacun desdits longerons (13) étant destiné à recevoir l'extrémité arrière (5) de l'un des organes d'appui (4) du contenant (2).

12. Installation selon la revendication 11 prise en combinaison avec la revendication 8, **caractérisée en ce que** chaque collecteur latéral (34) est fixé sur la longueur de la bordure extérieure de l'un des longerons latéraux (13) du chariot (10), et **en ce que** la paroi de plancher desdits collecteurs (34) s'étend sous le niveau du corps transversal (14).

13. Installation selon l'une quelconque des revendications 11 ou 12, **caractérisée en ce que** le chariot de réception (10) comporte le corps transversal (14) reliant les deux longerons latéraux (13) munis de moyens (32) en forme de patins pour son déplacement longitudinal.

14. Installation selon l'une quelconque des revendications 1 à 13, **caractérisée en ce que** le chariot de réception (10, 55) est équipé d'un système de bavette (35, 57) muni de volet(s) arrière (35a, 57a), apte(s) à venir en regard de la face arrière (8) du contenant (2) lors de son positionnement sur ledit chariot (10, 55), et éventuellement de volets latéraux (35b, 57b), prolongeant latéralement ledit ou lesdits volets arrière (35a, 57a), aptes à venir en regard de la partie arrière des faces latérales (9) du contenant (2) rapporté.

## Claims

1. An equipment for receiving a high-capacity container (2), for example of dumpster, bucket or transport box type, said container comprising a lower side (3) equipped with stand members (4) and a front side (6) equipped with a gripping member (7) adapted to cooperate with the articulated handling arm (26) or with the tipping winching ramp provided on the rear chassis of a carrier vehicle (25), wherein said equipment comprises:
(i) fixed means (12, 44) for receiving the front end of said stand members (4) of the container (2), and
(ii) a receiving member (10, 55) in the form of a mobile carriage that is provided, on the one hand, with upper support means (14, 16) on which the rear end (5) of the stand members (4) of said container (2) is intended to come and rest, and on the other hand, with means (15, 32) allowing said carriage to move longitudinally, in particular when the carrier vehicle (25) operates said container (2) in rest on said receiving carriage (10, 55), said receiving carriage (10, 55) being equipped with means (14, 34) for collecting liquids liable to flow out of the container (2),
**characterized in that** the collecting means (14, 34) are associated with at least one storing tank (40, 56).

2. The equipment according to claim 1, **characterized in that** the collecting means (14, 34) are consisted of a transversal body (14) comprising one or more suitably-distributed orifices (33, 41) for the evacuation of the collected fluids.

3. The equipment according to any one of claims 1 or 2, **characterized in that** the fixed receiving means (12, 44) comprise two fixed receiving members which are each in the form of a leg, said fixed members (12, 44) each being height-adjustable and each being adapted to be laid on the ground.

4. The equipment according to claim 3, **characterized in that** the two fixed receiving members (12, 44) each comprise an upper side (22a) shaped so as to receive one of the stand members (4) of the container (2) and a lower side (21a) adapted to be laid on the ground.

5. The equipment according to claim 4, **characterized in that** the fixed receiving legs (12, 44) comprise an upper bearing side (22a) lined with two parallel lateral wings (22b).

6. The equipment according to any one of claims 1 to 5, **characterized in that** the receiving carriage (10, 55) is adapted to cooperate with means (31) laid on the ground, for the longitudinal guidance thereof, and **in that** the collecting means (14, 34) are associated with collecting gutters (42) carried by said guiding means (31) for the flowing of fluids from said collecting means (14, 34) to the storing tank (40).

7. The equipment according to claim 6, **characterized in that** the transversal body (14) for collecting the liquids is associated with lateral collectors (34) comprising one or more suitably-distributed orifices (41) for the evacuation of the collected fluids.

8. The equipment according to claim 7, **characterized in that** the lateral collectors (34) are width-adjustable so as to fit as closely as possible to the width of the received container (2).

9. The equipment according to any one of claims 1 to 8, **characterized in that** the guiding means (31) consist of rails resting on the ground by means, on the one hand, at the front end thereof, of legs (44) that are intended to receive the front end of the stand members (4) of the container (2), and on the other hand, at their rear end, of two feet (45), said front legs (44) and rear feet (45) being height-adjustable, so that the inclination of the guiding rails (31) can be adjusted.

10. The equipment according to claim 9, **characterized in that** the rear end of the rails (31) also acts as a support for a vertical structure (46) comprising a hook member and a mobile covering element (48).

11. The equipment according to any one of claims 1 to 10, **characterized in that** the mobile carriage (10) consists of a structure, the upper receiving means of which correspond to the upper surface (16) of two side bars (13), each of said side bars (13) being intended to receive the rear end (5) of one of the stand members (4) of the container (2).

12. The equipment according to claim 11, when in combination with claim 8, **characterized in that** each lateral collector (34) is fastened to the length of the external edge of one of the side bars (13) of the carriage (10), and **in that** the floor wall of said collectors (34) extends below the level of the transversal body (14).

13. The equipment according to any one of claims 11 or 12, **characterized in that** the receiving carriage (10) comprises the transversal body (14) connecting the two side bars (13) provided with means (32) in the form of pads for the longitudinal displacement whereof.

14. The equipment according to any one of claims 1 to 13, **characterized in that** the receiving carriage (10, 55) is equipped with a skirt system (35, 57) provided with rear flap(s) (35a, 57a), adapted to come opposite the rear side (8) of the container (2) when the latter is positioned on said carriage (10, 55), and possibly lateral flaps (35b, 57b), laterally extending from said rear flap(s) (35a, 57a), adapted to come opposite the rear part of the lateral sides (9) of the received container (2).

## Patentansprüche

1. Einrichtung zur Aufnahme eines Behälters (2) mit großem Fassungsvermögen, beispielsweise von der Art Kübel oder Container, wobei der Behälter eine Unterseite (3), die mit Stützelementen (4) versehen ist, und eine Vorderseite (6) aufweist, die mit einem Greifelement (7) versehen ist, das mit dem gelenkigen Betätigungsarm (26) oder mit der kippbaren Windenrampe zusammenwirken kann, mit denen das hintere Gestell eines Tragfahrzeugs (25) ausgestattet ist, wobei die Einrichtung folgendes umfasst:
(i) feste Mittel (12, 44) für die Aufnahme des vorderen Endes der Stützelemente (4) des Behälters (2), und
(ii) ein Aufnahmeelement (10, 55) in Form eines beweglichen Wagens, der einerseits mit oberen Tragmitteln (14, 16), auf denen das hintere Ende (5) der Stützelemente (4) des Behälters (2) zur Auflage gelangen soll, und andererseits mit Mitteln (15, 32) versehen ist, die es dem Wagen ermöglichen, sich längs zu bewegen, insbesondere bei den Manövern durch das Tragfahrzeug (25) des Behälters (2), der auf dem Aufnahmewagen (10, 55) aufliegt,
wobei der Aufnahmewagen (10, 55) mit Mittel (14, 34) zum Sammeln der Flüssigkeiten, die aus dem Behälter (2) austreten können, versehen ist, **dadurch gekennzeichnet, dass** die Sammelmittel (14, 34) mit mindestens einem Speicherbehälter (40, 56) verbunden sind.

2. Einrichtung nach Anspruch 1, **dadurch gekennzeichnet, dass** die Sammelmittel (14, 34) von einem quer angeordneten Körper (14) gebildet sind, der eine oder mehrere Öffnungen (33, 41) zur Ableitung der gesammelten Flüssigkeiten umfasst, die entsprechend verteilt sind.

3. Einrichtung nach einem der Ansprüche 1 oder 2, **dadurch gekennzeichnet, dass** die festen Aufnahmemittel (12, 44) zwei feste Aufnahmeelemente umfassen, die jeweils die Form eines Beins haben, wobei die festen Elemente (12, 44) jeweils in der Höhe verstellbar und dazu ausgeführt sind, auf den Boden gestellt zu werden.

4. Einrichtung nach Anspruch 3 **dadurch gekennzeichnet, dass** die beiden festen Aufnahmeelemente (12, 44) jeweils eine Oberseite (22a), die dazu vorgesehen ist, eines der Stützelemente (4) des Behälters (2) auszunehmen, und eine Unterseite (21a) ausweisen, die dazu vorgesehen ist, auf den Boden gestellt zu werden.

5. Einrichtung nach Anspruch 4, **dadurch gekennzeichnet, dass** die festen Aufnahmebeine (12, 44) eine obere Stülzfläche (22a) umfassen, die durch zwei parallele Seitenflügel (22b) begrenzt ist.

6. Einrichtung nach einem der Ansprüche 1 bis 5, **dadurch gekennzeichnet, dass** der Aufnahmewagen (10, 55) geeignet ist, mit am Boden stehenden Mitteln (31) zusammenzuwirken, die seine Längsführung sicherstellen, und dass die Sammelmittel (14, 34) mit Sammelrinnen (42) verbunden sind, die von den Führungsmitteln (31) getragen werden, damit die Fluide von den Sammelmitteln (14, 34) zum Speicherbehälter (40) abfließen.

7. Einrichtung nach Anspruch 6, **dadurch gekennzeichnet, dass** der quer angeordnete Körper (14) zum Sammeln der Flüssigkeiten mit seitlichen Kollektoren (34) verbunden ist, die eine oder mehrere Öffnungen (41) zum Ableiten der gesammelten Fluide umfassen, die entsprechend verteilt sind.

8. Einrichtung nach Anspruch 7, **dadurch gekennzeichnet, dass** die seitlichen Kollektoren (34) in der Breite einstellbar sind, um sich genauer an die Breite des aufgesetzten Behälters (2) anzupassen.

9. Einrichtung nach einem der Ansprüche 1 bis 8, **dadurch gekennzeichnet, dass** die Führungsmittel (31) in Schienen bestehen, die auf dem Boden liegen, einerseits im Bereich ihres vorderen Endes mit Hilfe der Beine (44), die dazu bestimmt sind, das vordere Ende der Stützelemente (4) des Behälters (2) aufzunehmen, und andererseits im Bereich ihres hinteren Endes mit Hilfe von zwei Füßen (45), wobei die vorderen Beine (44) und die hinteren Füße (45) in der Höhe verstellbar sind, um die Neigung der Führungsschienen (31) einstellen zu können.

10. Einrichtung nach Anspruch 9, **dadurch gekennzeichnet, dass** das hintere Ende der Schienen (31) auch als Unterstützung für eine vertikale Struktur (46) dient, umfassend ein Befestigungselement und ein bewegliches Abdeckelement (48).

11. Einrichtung nach einem der Ansprüche 1 bis 10, **dadurch gekennzeichnet, dass** der bewegliche Wagen (10) in einer Struktur besteht, deren obere Aufnahmemittel der Oberseite (16) von zwei seitlichen Längsträgern (13) entsprechen, wobei jeder der Längsträger (13) dazu bestimmt ist das hintere Ende (5) eines der Stützelemente (4) des Behälters (2) aufzunehmen.

12. Einrichtung nach Anspruch 11 in Kombination mit Anspruch 8, **dadurch gekennzeichnet**, das jeder seitliche Kollektor (34) auf der Länge der äußeren Umrandung eines der seitlichen Längsträger (13) des Wagens (10) befestigt ist, und dass sich die Bodenwand der Kollektoren (34) unter dem Niveau des quer angeordneten Körpers (14) erstreckt.

13. Einrichtung nach einem der Ansprüche 11 oder 12, **dadurch gekennzeichnet, dass** der Aufnahmewagen (10) den quer angeordneten Körper (14) umfasst, der die beiden seitlichen Längsträger (13) verbindet, die mit Mitteln (32) in Form von Kufen für seine Längsverschiebung versehen sind.

14. Einrichtung nach einem der Ansprüche 1 bis 13, **dadurch gekennzeichnet, dass** der Aufnahmewagen (10, 55) mit einem Abweisblechsystem (35, 57) ausgestattet ist, das mit (einer) hinteren Klappe(n) (35a, 57a), die dazu geeignet ist (sind), gegenüber der Hinterseite (8) des Behälters (2) bei seiner Positionierung auf dem Wagen (10, 55) angeordnet zu werden, und eventuell mit seitlichen Klappen (35b, 57b) versehen ist, die seitlich die hintere(n) Klappe(n) (35a, 57a) verlängern und gegenüber dem hinteren Teil der Seitenflächen (9) des aufgesetzten Behälters (2) angeordnet werden können.
